(19) Europäisches Patentamt
European Patent Office
Office européen des brevets

(11) **EP 3 333 730 A1**

(12) **EUROPEAN PATENT APPLICATION**

(43) Date of publication:
**13.06.2018 Bulletin 2018/24**

(51) Int Cl.:
***G06F 17/30*** (2006.01)

(21) Application number: **17204619.5**

(22) Date of filing: **30.11.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **09.12.2016 JP 2016239179**

(71) Applicant: **FUJITSU LIMITED**
**Kanagawa 211-8588 (JP)**

(72) Inventor: **Nomura, Yuji**
**Kanagawa, 211-8588 (JP)**

(74) Representative: **Hoffmann Eitle**
**Patent- und Rechtsanwälte PartmbB**
**Arabellastraße 30**
**81925 München (DE)**

(54) **DATA PROCESSING DEVICE, DATA PROCESSING PROGRAM AND DATA PROCESSING METHOD**

(57)    A data processing device partitions a data sequence including a plurality of items of variable length block data into a plurality of search unit regions of a predetermined length, manages each variable length block data per search unit region, when making a data access to the data sequence, specifies a search unit region to which access target variable length block data belongs, based on position information included in a data access request, and searches data access target variable length block data from the variable length block data belonging to the specified search unit region, so that it is possible to easily specify access target variable length block data in the data sequence.

FIG. 1

**Description**

FIELD

The embodiment discussed herein is related to a data processing device, a data processing program and a data processing method.

BACKGROUND

In recent years, a cloud computing system is known, and uses software and data as needed according to a service type via a network such as the Internet.

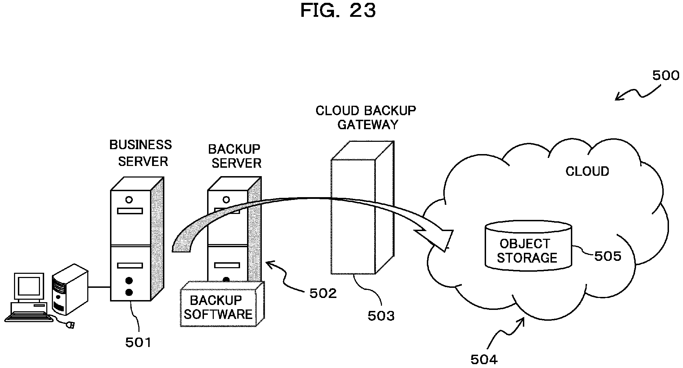

FIG. 23 is a diagram schematically illustrating a configuration example of a cloud computing system.

A cloud computing system 500 illustrated in this FIG. 23 is cloud storage service which provides a storage as service, and includes a business server 501, a backup server 502, a cloud backup gateway 503 and a cloud 504.

The cloud 504 includes an object storage 505. The object storage 505 is referred to as the "cloud storage" 505, too. The backup server 502 executes backup software, and data generated by the business server 501 is copied as backup data by this backup software and is stored in the object storage 505.

The cloud backup gateway 503 transfers a file copied as a backup by the backup software to the object storage 505. This cloud backup gateway 503 is realized by software which relays data transferred between the backup software and the cloud storage 505.

According to cloud storage service, charging is usually performed according to a data amount. Hence, the cloud backup gateway 503 is demanded to reduce a transfer data amount. As a technique of reducing the data amount, for example, deduplication is known.

According to the deduplication, a data sequence is divided into a plurality of blocks (referred to as chunks) of predetermined sizes, chunks are compared together with storage data, too, and the same chunk as a chunk already stored is not redundantly stored to reduce the data amount to store. Dividing a data sequence into a plurality of chunks will be referred to as chunking.

The chunking includes fixed length chunking and variable length chunking.

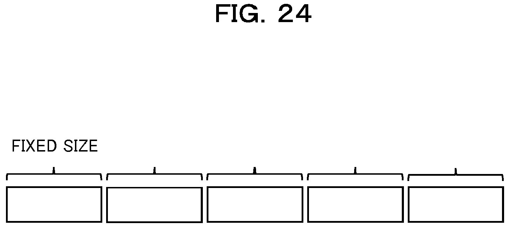

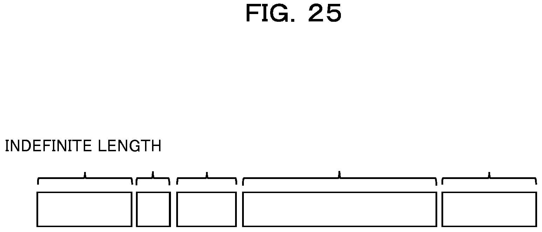

FIG. 24 is a diagram for explaining fixed length chunking. FIG. 25 is a diagram for explaining variable length chunking.

As illustrated in FIG. 24, the fixed length chunking is a method for dividing data by a predetermined fixed size. By contrast with this, the variable length chunking calculates a position to divide data according to data contents. Hence, according to the variable length chunking, a chunk size obtained from one data sequence is not fixed as illustrated in FIG. 25.

This variable length chunking is more suitable than the fixed length chunking for the purpose of file backup.

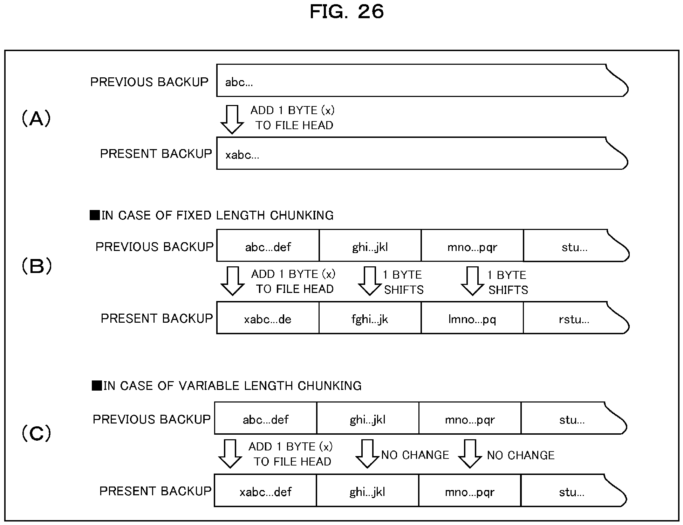

FIG. 26 is a diagram for explaining file backup by using the variable length chunking in comparison with the fixed length chunking.

Generally, backup is operated on a regular basis (every day, every week or every month). In an example illustrated in FIG. 26, symbol (A) indicates that data in which 1-byte data is added to a head of a previously backed-up file is newly backed up.

According to the fixed length chunking, a chunk size is fixed. Therefore, when 1-byte data is added to the head of the file, all items of subsequent chunk data are shifted one byte by one byte as indicated by symbol (B). In this way, all chunks have different data contents from previous backup, and there is no duplicated chunk. That is, all chunks are storage targets.

By contrast with this, according to the variable length chunking, chunks are divided according to data contents. When 1-byte data is added to the head of the file as indicated by symbol (C), a chunk boundary position only shifts one byte by one byte. Data contents of each chunk other than a head chunk does not change, and the chunks can be handled as duplicated chunks. That is, only the head chunk is a storage target, and other chunks are not storage targets.

In view of such characteristics, it is suitable for a cloud backup gateway to perform deduplication by the variable length chunking to reduce a data amount of transfer data.

CITATION LIST

PATENT LITERATURE

[Patent Literature 1] International Publication No. 2014/155668

[Patent Literature 2] Japanese Laid-open Patent Publication No. 2012-141738
[Patent Literature 3] Japanese Laid-open Patent Publication No. 2011-65268

## SUMMARY OF THE INVENTION

## PROBLEMS TO BE SOLVED BY THE INVENTION

Generally, a data input/output interface of a file system uses three pieces of information of an offset, a data size and a data storage region to make a data access for reading and writing files.

The offset indicates a read or write target position of data in a file, and indicates what number a byte is from a file head. A data size indicates a size of data to read or write. The data storage region indicates a memory region from which data is read or a memory region in which data is written.

In this regard, in a file subjected to fixed length chunking, a chunk size of each chunk is equal. Consequently, it is possible to express a chunk group configuring the file as an array, and easily find a head chunk and a tail chunk of access target data from the offset and the data size included in an input/output access request.

More specifically, a chunk index of a data head can be obtained based on an integer portion of a quotient obtained by dividing the offset by the chunk size (offset/chunk size). Further, a chunk index of a data tail can be obtained based on an integer portion of a quotient obtained by dividing (offset + data size) by the chunk size.

However, a conventional file system is not able to easily find a head chunk and a tail chunk of access target data in a file subjected to variable length chunking.

That is, the offset and data size information of the access target data, and an offset and a chunk size of each chunk configuring the file need to be compared and searched. More specifically, calculation such as cumulation of chunk sizes needs to be performed in order from the head chunk of the file.

Therefore, there is a problem that, as a file size becomes larger, a processing time taken to specify a chunk becomes longer, and as the file size becomes larger, read or write delays.

In one aspect, the object of the present invention is to make it possible to specify access target variable length block data in the data sequence.

## MEANS TO SOLVE THE PROBLEMS

According to an aspect of the embodiments, this data processing device includes: a block data manager that partitions a data sequence including a plurality of items of variable length block data into a plurality of search unit regions of a predetermined length, and manage each variable length block data per search unit region; a search unit region specifier that specifies, when a data access to the data sequence is made, a search unit region based on position information included in a data access request, the search unit region being a region to which access target variable length block data belongs; and a block searcher that searches data access target variable length block data from the variable length block data belonging to the specified search unit region.

## EFFECT OF THE INVENTION

According to one embodiment, it is possible to easily specify access target variable length block data in a data sequence.

## BRIEF DESCRIPTION OF DRAWINGS

FIG. 1 is a diagram illustrating a configuration of a cloud storage system according to an example of an embodiment;
FIG. 2 is a diagram for explaining a cache buffer memory of a cloud backup gateway according to the example of the embodiment;
FIG. 3 is a diagram for explaining a file managing method of the cloud storage system according to the example of the embodiment;
FIG. 4 is a diagram illustrating a configuration of a directory table illustrated in FIG. 1;
FIG. 5 is a diagram illustrating configurations of a file and a directory indicated by a directory table;
FIG. 6 is a diagram illustrating a configuration of an entry table illustrated in FIG. 1;
FIG. 7 is a diagram illustrating a configuration of a chunk map table illustrated in FIG. 1;
FIG. 8 is a diagram illustrating a configuration of a chunk table illustrated in FIG. 1;
FIG. 9 is a diagram for explaining write data of the cloud storage system according to the example of the embodiment;

FIG. 10 is a diagram for explaining attachment of write data in the cloud storage system according to the example of the embodiment;

FIG. 11 is a diagram for explaining an argument added to a write element;

FIG. 12 is a flowchart for explaining an outline of a write process of a file system in a cloud backup gateway according to the example of the embodiment;

FIG. 13 is a diagram illustrating a storage state of the write data in the cache buffer memory;

FIG. 14 is a diagram illustrating the storage state of the write data of the cache buffer memory;

FIG. 15 is a diagram illustrating the storage state of the write data in the cache buffer memory;

FIG. 16 is a diagram for explaining a write process of the cloud storage system according to the example of the embodiment;

FIG. 17 is a flowchart for explaining details of the write process of the cloud storage system according to the example of the embodiment;

FIG. 18 is a diagram for explaining the write process of the cloud storage system according to the example of the embodiment;

FIG. 19 is a diagram for explaining a method for attaching an existing chunk to the write data in the cloud storage system according to the example of the embodiment;

FIG. 20 is a diagram illustrating an argument of a read request;

FIG. 21 is a flowchart for explaining a read process of the cloud storage system according to the example of the embodiment;

FIG. 22 is a diagram for explaining the read process of the cloud storage system according to the example of the embodiment;

FIG. 23 is a diagram schematically illustrating a configuration example of a cloud computing system;

FIG. 24 is a diagram for explaining fixed length chunking;

FIG. 25 is a diagram for explaining variable length chunking; and

FIG. 26 is a diagram for explaining file backup by using the variable length chunking in comparison with the fixed length chunking.

DESCRIPTION OF EMBODIMENT(S)

An embodiment of a data processing device, a data processing program and a data processing method will be described below with reference to the drawings. In this regard, the following embodiment is only an exemplary embodiment, and does not intend to exclude application of various modified examples and techniques which are not explicitly described in the embodiment. That is, the present embodiment can be variously modified and carried out without departing from the scope of the present invention. Further, each drawing does not mean that the present invention includes only components illustrated herein, and the present invention can include other functions.

(A) Configuration

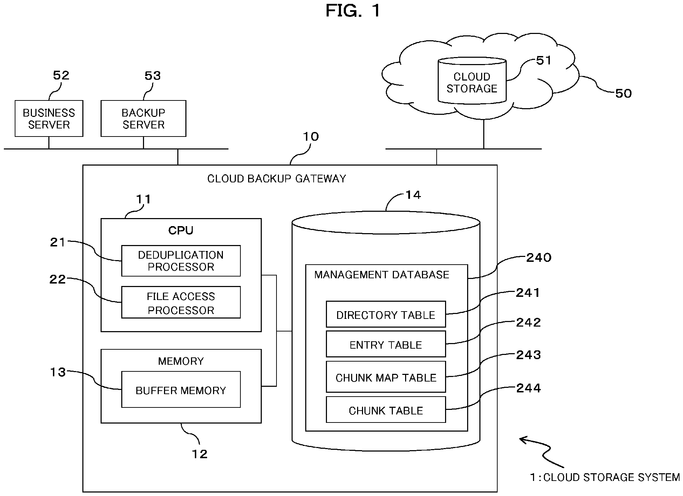

FIG. 1 is a diagram illustrating a configuration of a cloud storage system 1 according to an example of an embodiment.

The cloud storage system 1 is a cloud computing system which provides a storage region of a storage (cloud storage 51) of a cloud 50 as service.

The cloud storage system 1 illustrated in FIG. 1 includes the cloud 50, a business server 52, a backup server 53 and a cloud backup gateway 10.

The cloud 50 is a computer network system including a plurality of server computers (not illustrated). The cloud 50 includes the cloud storage 51, and provides the storage region of this cloud storage 51 as service.

The cloud storage 51 is a storage region in which data can be read or written, and is realized by one or more storage devices. The cloud storage 51 may be a RAID (Redundant Arrays of Inexpensive Disks) which uses a plurality of storage devices.

The business server 52, the backup server 53 and the cloud backup gateway 10 are installed at, for example, a user site.

The business server 52 is a computer which includes a server function, and realizes various functions by executing a program used by a user for business. A copy of data in the storage region (not illustrated) of this business server 52 is stored in the cloud storage 51 via the backup server 53 and the cloud backup gateway 10.

The backup server 53 functions as, for example, a NFS (Network File System) client to transmit copied file data to the cloud backup gateway 10.

The backup server 53 is a computer which includes a server function, and executes backup software to store the data copy in the business server 52 as a backup in a predetermined region of the cloud storage 51.

In this regard, the business server 52, the backup server 53 and the cloud storage 51 are known, and therefore will not be described in detail for ease of description. Further, configurations of these will not be illustrated, either.

The cloud backup gateway 10 transfers data copied by the backup server 53 (backup software) to the cloud storage 51. That is, the cloud backup gateway 10 is a data processing device which relays data transferred between the backup software and the cloud storage 51. Data processed by the cloud backup gateway 10 will be referred to as a file or file data below in some cases.

In the present embodiment, as illustrated in FIG. 1, the cloud backup gateway 10 is configured as an information processing device which includes a CPU (Central Processing Unit) 11, a memory 12 and a storage device 14.

The storage device 14 is a storage device such as a hard disk drive (HDD), a solid state drive (SSD) and a storage class memory (SCM), and stores various items of data.

For example, the storage device 14 stores data of a management database 240. This management database 240 stores each data of a directory table 241, an entry table 242, a chunk map table 243 and a chunk table 244.

The memory 12 is a storage memory including a ROM (Read Only Memory) and a RAM (Random Access Memory). In the ROM of the memory 12, a software program which realizes a function (e.g., file access control and a deduplication process) of the cloud backup gateway 10, and a data type of this program may be written. In this regard, these programs and data types may be stored in the storage device 14. The software program on the memory 12 is optionally read and executed by the CPU 11. Further, the RAM of the memory 12 is used as a primary storage memory or a working memory.

Furthermore, a specified storage region of the RAM of the memory 12 is used as a cache buffer memory 13, too.

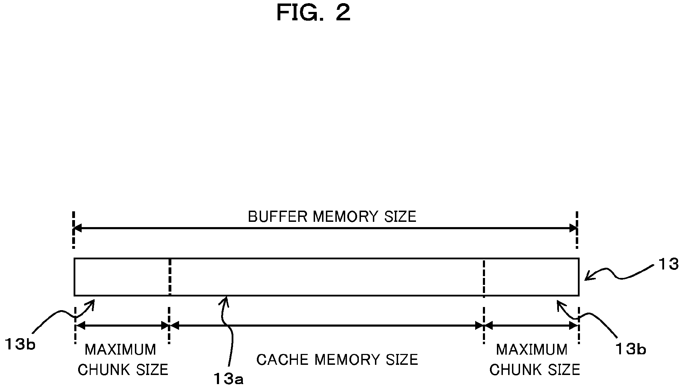

FIG. 2 is a diagram for explaining the cache buffer memory 13 of the cloud backup gateway 10 according to the example of the embodiment.

A file access processor 22 described below stores, in the cache buffer memory 13, write data which is written in the cloud storage 51 and read data which is read from the cloud storage 51.

In this case, the cache buffer memory 13 will be also referred to simply as the buffer memory 13. Further, a region of the buffer memory 13 in which write data is stored will be referred to as a write data storage region. Furthermore, a region of the buffer memory 13 in which read data is stored will be referred to as a read data storage region.

The write data stored in the cache buffer memory 13 is divided (chunked) into a plurality of variable length chunks by the file access processor 22 as described below. That is, the file access processor 22 writes or reads data in and from the cloud storage 51 by using the cache buffer memory 13.

As illustrated in FIG. 2, the cache buffer memory 13 includes maximum chunk size regions 13b which are regions of predetermined maximum chunk sizes (maximum chunk sizes) in the cloud storage system 1 before and after a cache memory region 13a used as a data cache.

Hence, the cache buffer memory 13 has a size (buffer memory size) obtained by adding a double size of the maximum chunk region 13b to the size of the cache memory region 13a.

The CPU 11 is a processing device which performs various types of control and computations, and realizes various functions by executing an OS and programs stored in the memory 12. That is, the CPU 11 executes a data processing program to realize functions of a deduplication processor 21 and the file access processor (a block data manager, a search unit region specifier, a block searcher, a right processor and a read processor) 22 as illustrated in FIG. 1.

In this regard, in the cloud backup gateway 10, the program (data processing program) which realizes the functions of the deduplication processor 21 and the file access processor 22 is provided in a format recorded in a computer-readable medium such as a flexible disk, a CD (a CD-ROM, a CD-R or a CD-RW), a DVD (a DVD-ROM, a DVD-RAM, a DVD-R, a DVD+R, a DVD-RW, a DVD+RW or a HD DVD), a blu-ray disk, a magnetic disk, an optical disk and a magnetooptical disk. Further, a computer reads the program from this recording medium, and transfers and stores the program in an internal storage device or an external storage device. Furthermore, this program may be recorded in the recording device (recording medium) such as a magnetic disk, an optical disk or a magnetooptical disk, and may be provided from this storage device to the computer via a communication path.

To realize the functions of the deduplication processor 21 and the file access processor 22, the program stored in an internal storage device (the memory 12 in the present embodiment) is executed by a microprocessor (the CPU 11 in the present embodiment) of the computer. In this case, the program recorded in the recording medium may be read and executed by the computer.

The file access processor 22 realizes a file managing function of managing processing target file data.

(a) Variable Length Chunking

The file access processor 22 has a function as a data divider which divides a data file into a plurality of data blocks (chunks). For example, the file access processor 22 divides backup data (data file) received from an external device such as the backup server 53.

The file access processor 22 divides a data file access into a plurality of variable length chunks (variable length chunks and partial data) (variable length chunking process), and performs a process of reading or writing files in chunk units from and in the cloud storage 51. Further, the deduplication processor 21 described below performs a deduplication process per generated variable length chunk.

The file access processor 22 performs variable length chunking (variable length chunk division) on a processing target file by, for example, a CDC (Content Defined Chunking) method.

According to the CDC, a file is divided into variable length blocks (chunks) according to contents of the file. The file access processor 22 finds a chunk boundary by shifting Window of a fixed length from this head one byte by one byte and calculating a hash value. In this regard, the CDC is a known method, and therefore will not be described in detail.

Further, the file access processor 22 may use a Rabin-karp rolling hash algorithm in combination to reduce a calculation amount of the CDC. In this regard, the Rabin-karp rolling hash algorithm is also a known method, and therefore will not be described in detail.

(b) File System Management

The file access processor 22 includes a file system managing function, and reads and writes data from and in the cloud storage 51.

For example, the file access processor 22 functions as a NFS server, and transmits and stores data copied by the backup server 53 to and in the cloud storage 51.

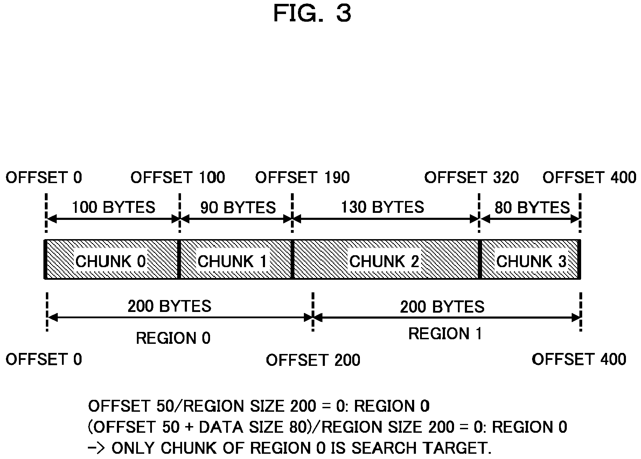

FIG. 3 is a diagram for explaining a file managing method of the cloud storage system 1 according to the example of the embodiment.

A file illustrated in FIG. 3 is configured by four variable length chunks of chunks 0 to 3.

As illustrated in FIG. 3, the file access processor 22 partitions (classifies or divides) a file into a plurality of (two in an example illustrated in FIG. 3) search unit regions (region) of a fixed length (200 bytes in the example illustrated in FIG. 3) from a head of the file. The search unit region will be referred to as a region below. A region size is larger than a chunk size. Hence, each region includes one or more chunks.

Thus, a variable length chunk configuring the file is included in one of regions. That is, each variable length chunk is allocated to one of regions in the file.

The cloud storage system 1 specifies a region by using a region number.

In the example illustrated in FIG. 3, a region of a region number "0" is expressed as a region 0, and a region number "1" is expressed as a region 1.

Regions partition a file at equal intervals, so that it is possible to specify a position in the file by using each region. That is, each region functions as a chunk index. Hence, by partitioning a file into a plurality of regions having fixed lengths at equal intervals, the file access processor 22 fixes the length of the file configured by the variable length chunks.

In the example illustrated in FIG. 3, the chunks 0, 1 and 2 belong to the region 0, and the chunk 3 belongs to the region 1. In the present embodiment, a chunk position is expressed as a head position yet is not limited to this. For example, the chunk position may be expressed as a chunk tail or center and can be optionally changed and carried out.

The file access processor 22 manages files by using the directory table 241, the entry table 242, the chunk map table 243 and the chunk table 244. These directory table 241, entry table 242, chunk map table 243 and chunk table 244 are registered and managed in the management database 240 as illustrated in, for example, FIG. 1.

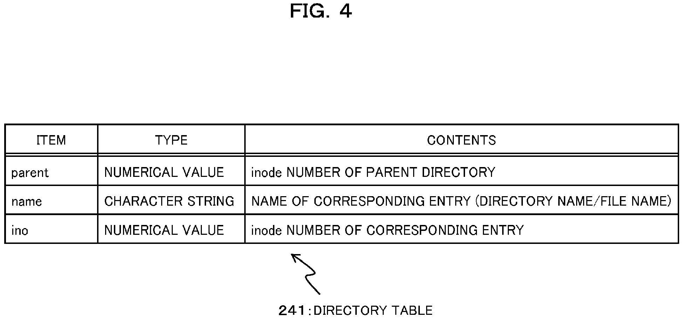

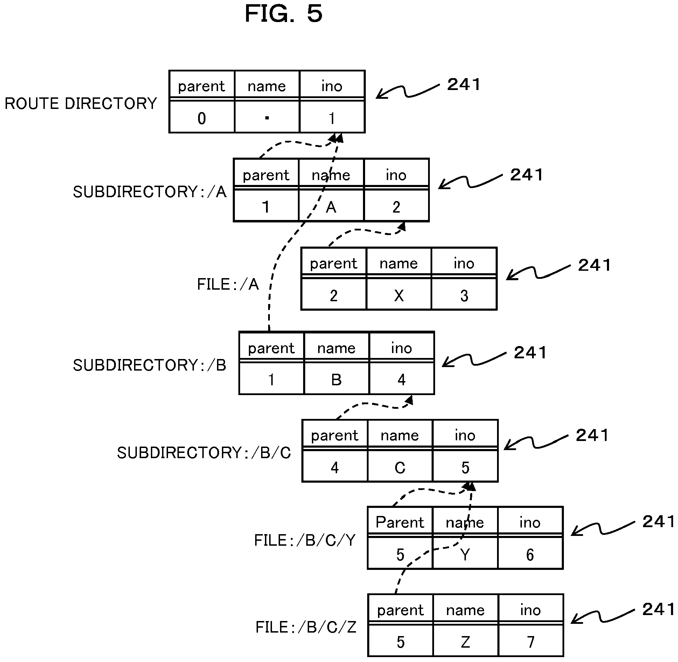

FIG. 4 is a diagram illustrating a configuration of the directory table 241 illustrated in FIG. 1. Further, FIG. 5 is a diagram illustrating configurations of a file and a directory indicated by the directory table 241.

The directory table 241 is management information which expresses a directory hierarchy. As illustrated in FIG. 4, the directory table 241 is configured by associating items parent, name and ino. The item "parent" is an inode number of a parent directory, and a data type (type) is a numerical value. The item "inode" is management data in which information about a file or a directory is recorded in a file system.

The item "name" is an entry name, and is registered as a combination of a directory name and a file name (directory name/file name). A data type of name is a character string. The item "ino" is an inode number of an entry, and a data type is a numerical value.

The directory table 241 is configured as a hash table by using the item ino as a key. As illustrated in FIG. 5, by tracking a link by using ino and parent, it is possible to search a record of designated ino at a high speed. In this regard, the directory table 241 may be realized by a general SQL (Structured Query Language) database. Further, the directory table 241 may include items other than the items illustrated in FIG. 4.

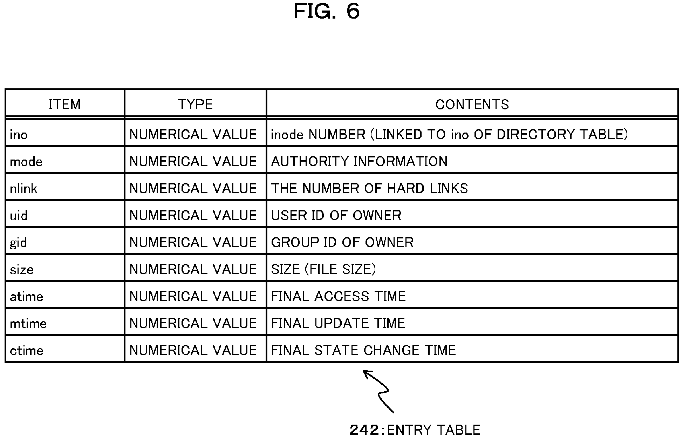

FIG. 6 is a diagram illustrating a configuration of the entry table 242 illustrated in FIG. 1.

The entry table 242 is management information which expresses a directory or metadata of a file. As illustrated in FIG. 6, the entry table 242 is configured by associating items of ino, mode, nlink, uid, gid, size, atime, mtime and ctime.

The item "ino" represents an inode number, and is linked to ino of the directory table 241. The item "mode" represents authority information. The item "nlink" represents the number of hard links, and the item "uid" represents a user ID of an owner. The item "gid" represents a group ID of an owner, and the item "size" represents a file size. The item "atime" represents a final access time, and the item "mtime" represents a final update time. Further, The item "ctime" represents a final state change time. Data types of these ino, mode, nlink, uid, gid, size, atime, mtime and ctime are numerical values.

The entry table 242 is configured as a hash table by using the item ino as a key, so that it is possible to search a record of designated ino at a high speed. In this regard, the entry table 242 may be realized by a general SQL database. Further, the entry table 242 may include items other than the items illustrated in FIG. 6.

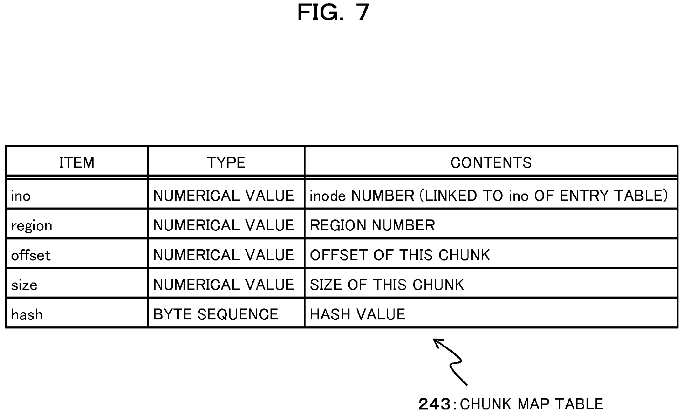

FIG. 7 is a diagram illustrating a configuration of the chunk map table 243 illustrated in FIG. 1.

The chunk map table 243 is management information which expresses a chunk configuring a file, and indicates which chunk the file is. As illustrated in FIG. 7, the chunk map table 243 is configured by associating items ino, region, offset, size and hash.

The item "ino" represents an inode number, and is linked to ino of the entry table 242. The item "region" represents a region number. This region indicates in which region a chunk is included in (belongs to) a file.

The chunk map table 243 includes this region as a management item, so that a region number in a file is associated with a chunk. The file access processor 22 functions as a block data manager which manages a plurality of variable length chunks configuring a file per region by creating, and updating and managing this chunk map table 243.

In the example illustrated in FIG. 3, the chunks 0, 1 and 2 belong to the region 0, and the chunk 3 belongs to the region 1.

The item "offset" represents an offset value, and represents a position from a file head. The item "size" represents a chunk size. The item "hash" is a hash value of the chunk, and is used to specify chunk contents.

In this regard, data types of ino, region, offset and size are numerical values, and a data type of hash is a byte sequence.

The chunk map table 243 is configured as a hash table by using the item region as a key, so that it is possible to search a record of designated region at a high speed. In this regard, the chunk map table 243 may be realized by a general SQL database. In this regard, the chunk map table 243 may include items other than the items illustrated in FIG. 7.

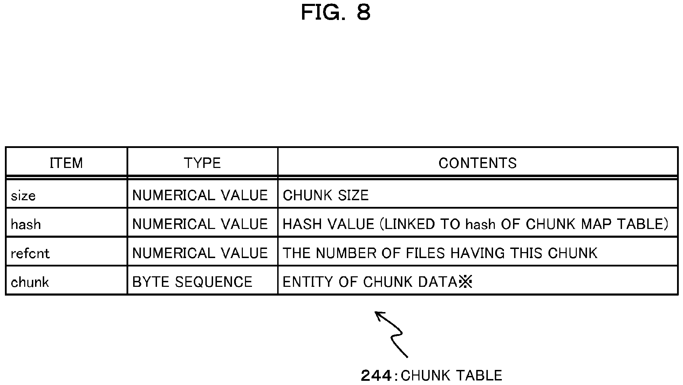

FIG. 8 is a diagram illustrating a configuration of the chunk table 244 illustrated in FIG. 1.

The chunk table 244 is management information which represents a chunk. As illustrated in FIG. 8, the chunk table 244 is configured by associating items size, hash, refcnt and chunk.

The item "size" represents a chunk size of this chunk. The item "hash" is a hash value of the chunk, and is used to specify chunk contents. This hash is linked to hash of the chunk map table 243. The item "refcnt" represents the number of files including the chunk. The item "chunk" is a chunk data entity (actual data). In this regard, the chunk table 244 does not need to include actual data of a chunk as chunk. Chunk actual data may be stored in other storage regions, pointer information for this storage region may be set to chunk of the chunk table 244, and various modifications can be made and carried out.

In this regard, data types of size, hash and refcnt are numerical values, and a data type of chunk is a byte sequence.

The chunk table 244 is configured as a hash table by using the item hash as a key, so that it is possible to search a record of designated hash at a high speed. In this regard, the chunk table 244 may be realized by a general SQL database. Further, the chunk table 244 may include items other than items illustrated in FIG. 8. Furthermore, the deduplication processor 21 realizes a deduplication process by using this chunk table 244.

A write process performed by the file access processor 22 with respect to the cloud storage 51 will be described.

The file access processor 22 writes file data by repeating a write request of a predetermined size to the cloud storage 51 a plurality of times, and finally flashes or closes a file.

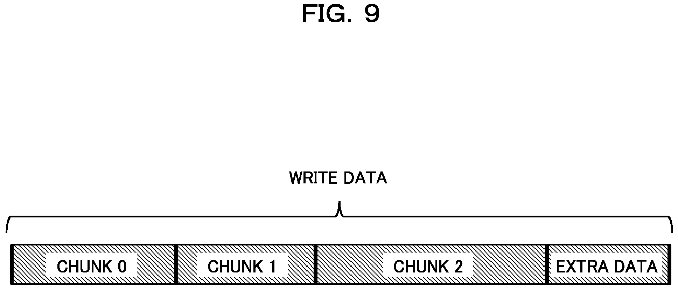

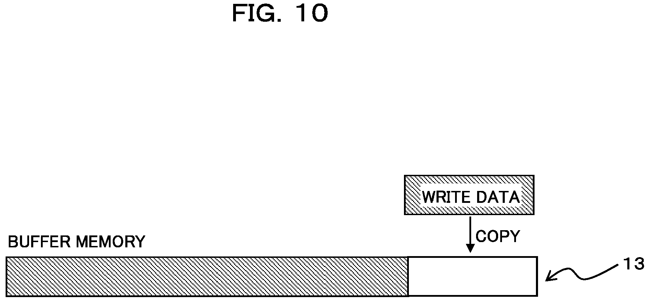

FIG. 9 is a diagram for explaining write data in the cloud storage system 1 according to the example of the embodiment. FIG. 10 is a diagram for explaining attachment of write data in the cloud storage system 1 according to the example of the embodiment.

As illustrated in FIG. 9, write data delivered upon one write request is divided into a plurality of chunks in some cases. A remaining extra portion (extra data) obtained after the write data is divided into a plurality of chunks in order from a head of the write data is not necessarily divided as one chunk. The file access processor 22 generates one chunk by attaching extra data which is not able to be divided as one chunk, to a head portion of write data of a next write request.

This extra data attaching process causes deterioration of write processing performance. Hence, as illustrated in FIG. 10, by caching write data of a plurality of times on the buffer memory 13, and performing a chunking process on a large size as much as possible, the file access processor 22 decreases the number of times of an attaching process and suppresses deterioration of processing performance.

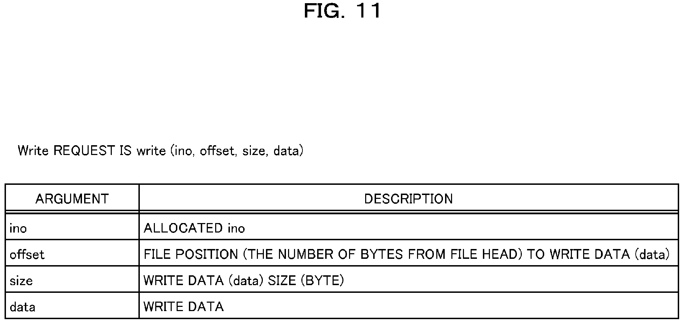

FIG. 11 is a diagram for explaining an argument added to a write request.

As illustrated in FIG. 11, for example, ino, offset, size and data are added as arguments to the write request. That is, the write request can be expressed by write (ino, offset, size and data).

The argument ino is an inode number allocated to the write request. The item "offset" represents a file position (the number of bytes from a file head) at which data (data) is written. The item "size" is a write data (data) size (bytes), and the item "data" is write data. The items "offset" and "size" are used as position information indicating a data access (write) target position of a file.

The deduplication processor 21 performs the deduplication process in chunk units. When, for example, the deduplication processor 21 writes a data file in the cloud storage 51 and the same chunk is already stored in the cloud storage 51, the deduplication processor 21 realizes deduplication by preventing the chunk from being stored in the cloud storage 51.

The deduplication processor 21 executes the deduplication between a plurality of chunks, and stores in the cloud storage 51 the chunks obtained by executing the deduplication.

The deduplication processor 21 decides a match/mismatch of chunks by comparing chunk FPs (Finger Print), i.e., hash values of data included in the chunks, and decides whether or not the chunks are duplicated. Further, the deduplication processor 21 decides whether or not the chunks are duplicated by comparing the chunk FP and each existing chunk FP stored in the cloud storage 51. That is, the deduplication processor 21 performs duplication storage decision.

In the present embodiment, the deduplication processor 21 decides that chunks of the same FP are the same data block.

When, for example, storing a file in the cloud storage 51, the deduplication processor 21 refers to the chunk table 244 regarding each chunk configuring this file, and performs deduplication storage decision on each chunk.

The chunk table 244 includes hash of each chunk as described above, and this hash functions as FP information for specifying a chunk. That is, the chunk table 244 functions as deduplication information used for deduplication by the deduplication processor 21.

The deduplication processor 21 decides the match/mismatch of the chunks by using hash of the chunk table 244, and thereby decides whether or not the chunks are deduplicated. This hash can be realized by using various known methods, and will not be described in detail.

The deduplication processor 21 decides whether or not the same chunk as each chunk is stored in the cloud storage 51 by referring to the chunk table 244 (deduplication information).

Further, when, for example, storing a file in the cloud storage 51 and deciding that the same chunk as a processing target chunk is stored in the cloud storage 51, the deduplication processor 21 discards this processing target chunk, and prevents duplication and storage of this processing target chunk in the cloud storage 51. That is, the deduplication processor 21 realizes deduplication of storing only one data block of the same hash in the cloud storage 51.

The deduplication processor 21 reduces a file storage region by sharing one chunk stored in the cloud storage 51 between a plurality of files. That is, the deduplication processor 21 functions as a deduplication engine.

In this regard, for deduplication, an inline scheme for comparing file data in the deduplication processor 21 and storing the file data in the cloud storage 51 can be used. In this regard, the deduplication is not limited to this. For example, other schemes such as a post process scheme or a client scheme may be used and optionally changed and carried out.

Further, the deduplication processor 21 stores a result such as creation of hash or a chunk configuration performed per chunk in the chunk table 244.

Furthermore, when reading a file from the cloud storage 51, the deduplication processor 21 reads the chunk table 244 for a volume stored in this cloud storage 51.

The deduplication processor 21 restores the volume from a chunk when reading the data. The deduplication processor 21 refers to, for example, the chunk table 244 and restores the file by using a chunk read from the cloud storage 51. That is, the deduplication processor 21 creates a file by copying a chunk according to the chunk table 244.

In this regard, a file restoring method for using a chunk based on the chunk table 244 is realized by using various known methods, and will not be described in detail.

(B) Operation

A process of the cloud backup gateway 10 of the cloud storage system 1 according to the example of the embodiment configured as described above will be described.

(a) Write Process of File System

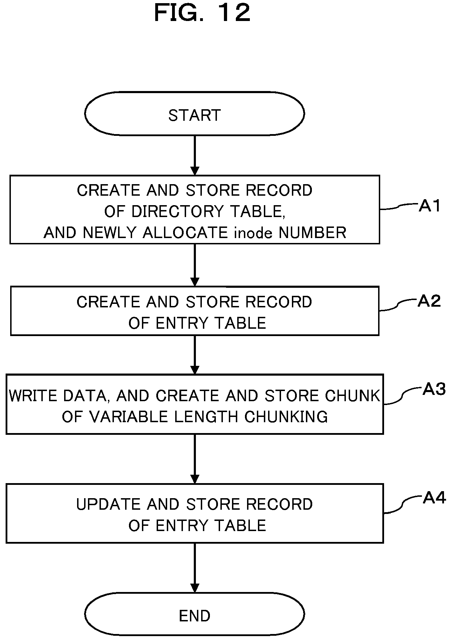

FIG. 12 is a flowchart (steps A1 to A4) for explaining an outline of a write process of a file system which is the cloud backup gateway 10 according to the example of the embodiment.

A process in a case where a new file is created will be described below.

In step A1, the file access processor 22 creates and stores a record of the directory table 241.

The file access processor 22 newly allocates an inode number to a newly created file.

In step A2, the file access processor 22 makes and stores a record of the entry table 242.

In step A3, the file access processor 22 writes data in the cloud storage 51.

In this regard, the file access processor 22 creates and stores a chunk by variable length chunking. Further, the file access processor 22 creates the chunk map table 243 and the chunk table 244, too.

The file access processor 22 processes a write request according to following processes (1) to (3).

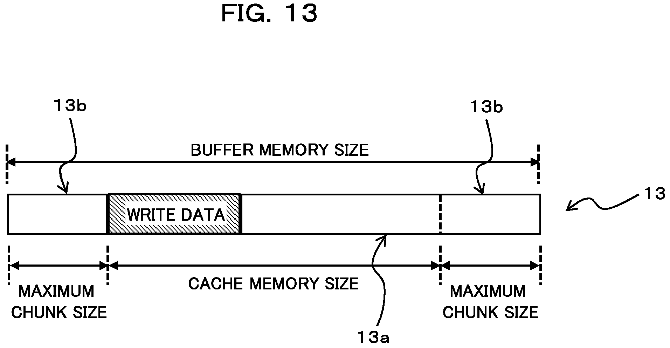

FIGS. 13 to 15 are diagrams illustrating a storage state of write data in the cache buffer memory 13.

(1) When the cloud backup gateway 10 receives a first write request from the backup server 53, as illustrated in FIG. 13, the file access processor 22 copies write data (data) corresponding to size to a head position of the cache memory region 13a of the cache buffer memory 13. In this regard, size is a value added as an argument to the write request.

That is, the file access processor 22 copies the write data (data) corresponding to size, and stores the write data at the head position of the cache memory region 13a of the cache buffer memory 13.

Further, the file access processor 22 stores a value (offset + size) obtained by adding size to offset in a predetermined region such as the memory 12.

(2) When receiving a next write request, the file access processor 22 compares offset and offset + size.

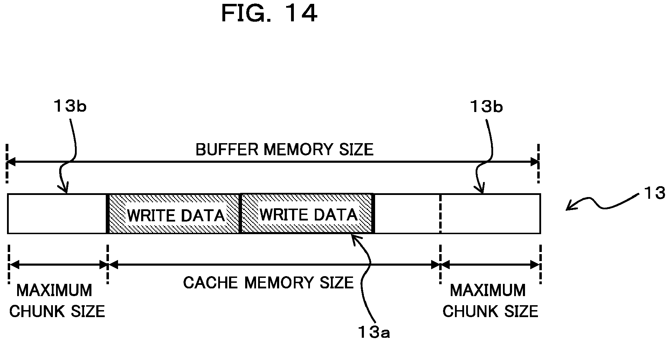

When offset and offset + size match as a result of the comparison, and the file access processor 22 decides that a write request which is being processed is a write request continuing from the process (1), the file access processor 22 stores write data (data) at a position subsequent to data previously stored in the cache memory region 13a as illustrated in FIG. 14.

In this regard, when there is no room for write data to be stored in the cache memory region 13a, the file access processor 22 performs a variable length chunking process on data on the cache memory region 13a and moves the data to the cloud storage 51.

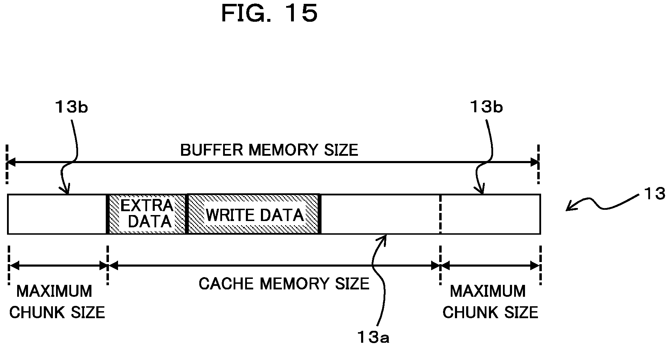

Further, when this variable length chunking process produces extra data, the file access processor 22 moves this extra data to the head position of the cache memory region 13a as illustrated in FIG. 15.

Furthermore, the file access processor 22 stores write data which is not able to be stored since there is no room in the cache memory region 13a, at a position subsequent to the extra data in the cache memory region 13a.

Meanwhile, when offset and offset + size do not match as a result of comparison, the file access processor 22 decides that a newly received write request is different from (discontinuous to) a previously processed write request. The file access processor 22 performs the variable length chunking process on data in the cache memory region 13a, and moves the data to the cloud storage 51. Further, the file access processor 22 stores a value (offset + size) obtained by adding size to offset, in a predetermined region such as the memory 12.

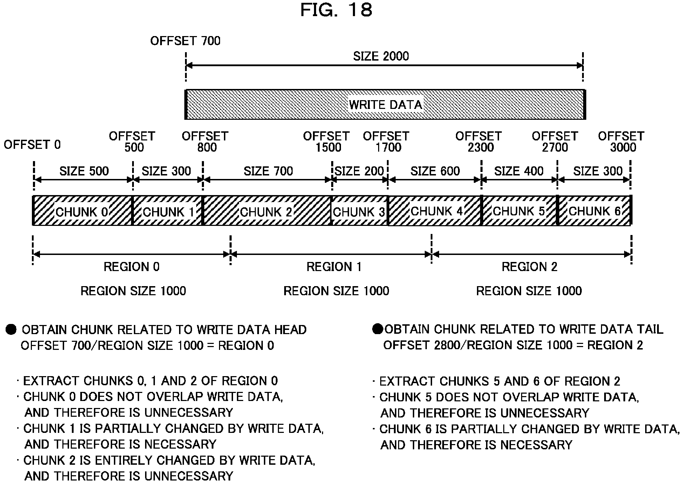

(3) The file access processor 22 flashes/closes a file. That is, the file access processor 22 performs the variable length chunking process on the data stored in the cache buffer memory 13, and moves the data to the cloud storage 51. In this regard, the variable length chunking process of the file access processor 22 will be described in detail below with reference to FIG. 18.

Further, by performing variable length chunking, the file access processor 22 uses remaining extra data in the cache memory region 13a as a chunk and stores the extra data in the cloud storage 51.

Subsequently, in step A4, the file access processor 22 updates and stores a record of the entry table 242. More specifically, the file access processor 22 updates size information (size) and time information (atime).

(b) Write Process

Next, the write process of the file access processor 22 will be described in detail.

The file access processor 22 creates and stores a chunk (variable length chunk) by performing variable length chunking on the data on the cache buffer memory 13.

The cloud backup gateway 10 manages two pieces of input information of offset and size regarding the cache buffer memory 13.

In this regard, the input information offset is a file position (the number of bytes from a file head) at which data is written in the cache buffer memory 13. Further, the input information size is an effective data size (bytes) in the cache buffer memory 13.

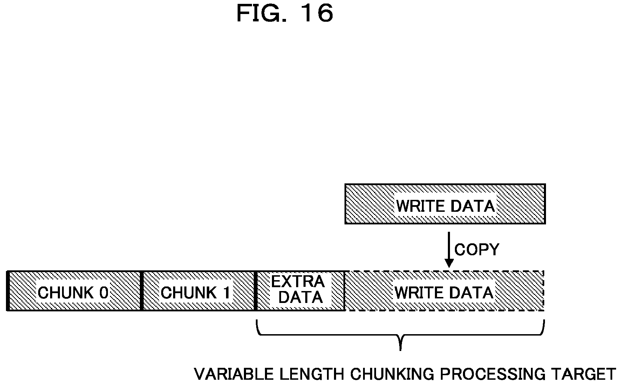

FIG. 16 is a diagram for explaining the write process of the file access processor 22 of the cloud storage system 1 according to the example of the embodiment.

When the write request is to additionally write an existing file, there is a chunk immediately before this offset.

However, this chunk is likely to be data (extra data) which remains as variable length chunking. In this regard, the extra data means data which is not punctually (clearly) divided as chunks.

Further, when the write request is to update the existing file, there is a chunk which overlaps this offset and size.

When this existing chunk is attached to new data, a chunk boundary is likely to change. Therefore, the existing chunk needs to be copied on the buffer memory.

As illustrated in FIG. 16, the file access processor 22 adds write data subsequent to the extra data.

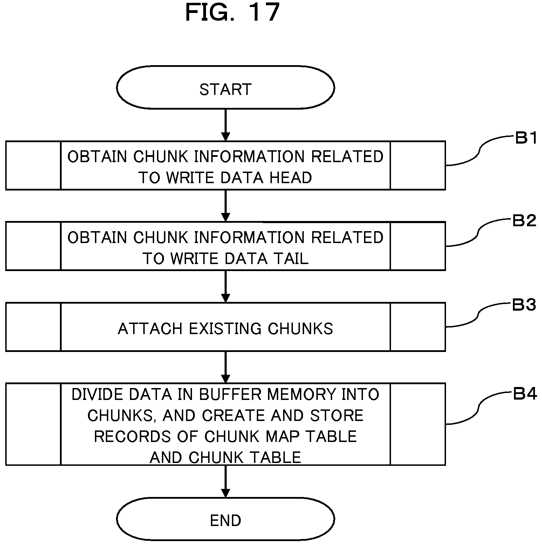

The write process of the cloud storage system 1 according to the example of the embodiment configured as described above will be described in detail with reference to FIG. 18 and according to a flowchart (steps B1 to B4) illustrated in FIG. 17. In this regard, FIG. 18 is a diagram for explaining the write process of the cloud storage system 1.

FIG. 18 illustrates an example where data (write data) whose offset is 700 and whose size is 2000 bytes is written in a file subjected to variable length chunking.

In step B1, the file access processor 22 obtains chunk information related to a write data head.

More specifically, by first calculating a value (offset/region size) obtained by dividing offset added as an argument to the write request by a region size, and deciding an integer portion of this quotient as a region number, the file access processor 22 specifies a region to which a chunk corresponding to the write data head belongs.

In the example illustrated in FIG. 18, the file access processor 22 obtains the region number to which the chunk corresponding to the write data head belongs by calculating the following equation. In the following equation, the integer portion of the quotient is used as the region number.

$$700 \ (offset)/1000 \ (region \ size) \approx 0 \ (= region \ 0)$$

This shows that the chunk corresponding to the write data head portion belongs to the region 0.

Thus, the file access processor 22 specifies a region (first region and a first search unit region) of the file to which a chunk (first variable length block data) in which the write data head is written belongs, based on position information (offset & size) included in the write request.

Next, the file access processor 22 refers to the chunk map table 243, and obtains a record (chunk) including the previously specified region number. In the example illustrated in FIG. 18, the chunks 0, 1 and 2 belong to the region 0.

Subsequently, the file access processor 22 compares obtained offset and size of each record, and offset and size of inputted write data (input information). Further, the file access processor 22 selects a record whose offset and size correspond to offset and size of the input information.

In the example illustrated in FIG. 18, the offset of the write data is 700, and therefore the chunk 1 whose offset is 500 to 800 partially overlaps this write data. Further, the offset of the chunk 0 is 0 to 500, and therefore does not overlap the write data. The write data has the offset which is 700 as a start point and has a data size of 2000 bytes, and all chunks 2 whose offset is 800 as a start point and whose size is 700 overlap the write data. That is, the chunk 2 is entirely overwritten (changed) by the write data.

Hence, the file access processor 22 specifies the chunk 1 as a chunk related to the write data head. Thus, the file access processor 22 searches the chunk related to the write data head by searching an offset of a chunk included in the specified first region.

In step B2, the file access processor 22 obtains chunk information related to a write data tail. The file access processor 22 specifies a chunk related to the write data tail by the same method as that in step B1.

In the example illustrated in FIG. 18, the file access processor 22 obtains a region number to which the chunk corresponding to the write data tail belongs by calculating the following equation.

In this regard, the file access processor 22 finds a region (second region) of the chunk related to the write data tail by calculating "(offset + size)/region size". The file access processor 22 calculates the following equation. In the following equation, an integer portion of a quotient is used as a region number.

2700 (offset)/1000 (region size ≈ 2 (=region 2). This shows that the chunk corresponding to the write data tail portion belongs to the region 2.

Thus, the file access processor 22 specifies the region of the file (the second region or the second search unit region) to which the chunk (second variable length block data) in which the write data tail is written belongs, based on the position information (offset & size) included in the write request.

Further, when making a data access to a file, the file access processor 22 functions as a search unit region specifier which specifies a region to which an access target variable length chunk belongs, based on position information (offset & size) included in the data access request.

Furthermore, in the example illustrated in FIG. 18, a write data offset is 700, and a data size is 2000 bytes.

Hence, a chunk 6 whose offset is 2700 to 3000 partially overlaps this write data tail. Further, an offset of a chunk 5 is 2300 to 2700, and therefore all chunks 5 overlap the write data. The write data has the offset which is 700 as a start point and has a data size of 2000 bytes, and therefore all chunks 5 whose offset is 2300 as a start point and whose size is 400 overlap the write data. That is, the chunk 5 is entirely overwritten (changed) by the write data.

Hence, the file access processor 22 specifies the chunk 6 as a chunk related to the right data tail. Thus, the file access processor 22 searches the chunk related to the right data tail by searching an offset of a chunk included in the specified second region.

Thus, the file access processor 22 functions as a block searcher which searches a data access target variable length chunk from the variable length chunk belonging to the specified region.

In step B3, the file access processor 22 attaches to write data an existing chunk (existing chunk) which overlaps write data head and tail specified in steps B1 and B2.

That is, the file access processor 22 refers to the chunk map table 243, and obtains hash of the chunk which overlaps the write data start point (head) calculated in step B1. The file access processor 22 refers to the chunk table 244 based on obtained hash, and reads chunk (chunk data) of a record having the same value as this hash as the first existing chunk (first variable length block data).

Further, the file access processor 22 refers to the chunk map table 243 and obtains hash of the chunk which overlaps the write data tail calculated in step B2. The file access processor 22 refers to the chunk table 244 based on obtained hash, and reads chunk (chunk data) of a record having the same value as this hash as a second existing chunk (second variable length block data).

The file access processor 22 creates update data of a processing target file by attaching the read first existing chunk to the write data head and the second existing chunk to the write data tail.

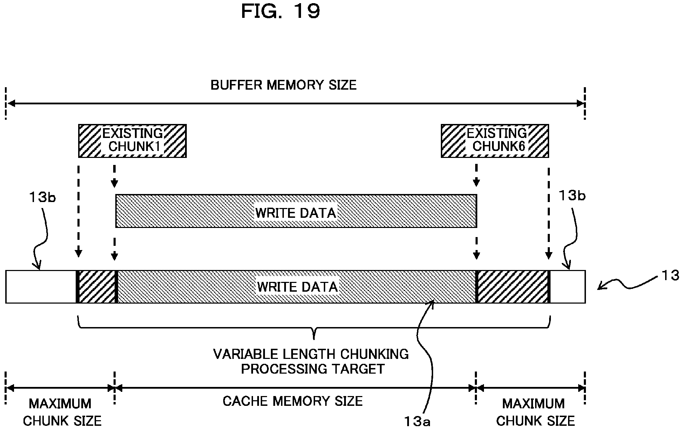

FIG. 19 is a diagram for explaining a method for attaching an existing chunk to write data in the cloud storage system 1 according to the example of the embodiment.

The file access processor 22 attaches the existing chunk to the write data by using the cache buffer memory 13.

FIG. 19 illustrates an example where the write data is stored in the cache memory region 13a, and an existing chunk 1 (chunk 1) is attached to a right data head and an existing chunk 6 (chunk 6) is attached to a write data tail.

When an existing chunk is attached to write data, write data which is new data is used for a portion at which the write data and the existing chunk overlap.

Further, data (update data) obtained by attaching the existing chunks to the write data head and tail is a variable length chunking processing target.

Subsequently, in step B4, the file access processor 22 divides variable length chunking processing target data stored in the cache buffer memory 13 into chunks. Further, the file access processor 22 generates and stores each record of the chunk map table 243 and the chunk table 244.

More specifically, the file access processor 22 divides data of the cache buffer memory 13 into chunks. The file access processor 22 calculates a chunk offset (offset), a size (size), a region number (region) and a hash value (hash) based on the generated chunk data.

In this regard, the region number is found based on an integer value of a quotient obtained by calculating offset/region size.

The file access processor 22 creates and stores, for example, a record of the chunk map table 243 by using each calculated value.

Further, the deduplication processor 21 refers to the chunk table 244 based on hash of the generated chunk, and checks whether or not it is possible to obtain a record corresponding to hash from the chunk table 244.

When a record of the same hash is not able to be obtained from the chunk table 244, the deduplication processor 21 creates and stores a record in the chunk table 244 as a new chunk.

Further, when the record of the same hash can be obtained from the chunk table 244, the deduplication processor 21 adds (increments) 1 to refcnt of the obtained record in the chunk table 244, and updates the record of the chunk table 244. The deduplication processor 21 discards hash of the chunk generated for deduplication since the record of the same hash is already stored in the chunk table 244.

Thus, the deduplication processor 21 performs a deduplication process on each chunk subjected to variable length chunking by the file access processor 22.

Further, a file is updated by using update data subjected to the deduplication process. Hence, the file access processor 22 functions as a write processor which partially replaces the file with the update data.

(c) Read Process

Next, a read process of the cloud storage system 1 according to the example of the embodiment will be described.

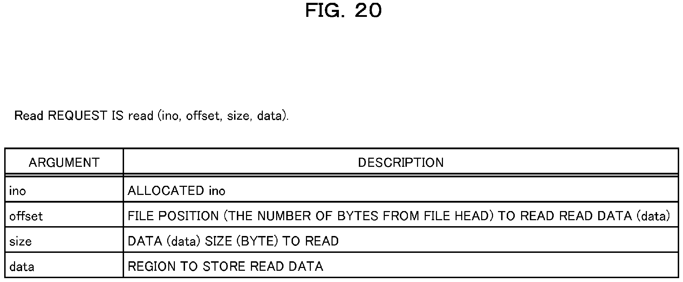

FIG. 20 is a diagram illustrating an argument of a read request. As illustrated in FIG. 20, ino, offset, size and data are added as arguments to the read request. That is, the read request can be expressed as read (ino, offset, size and data).

In this regard, the argument ino is an inode number allocated to the read request. The item "offset" represents a file position (the number of bytes from a file head) from which read data (data) is read. The item "size" represents a size (bytes) of data (data) to read, and the item "data" represents a region in which read data is stored. The items "offset" and "size" are used as position information indicating a data access (read) target position in the file.

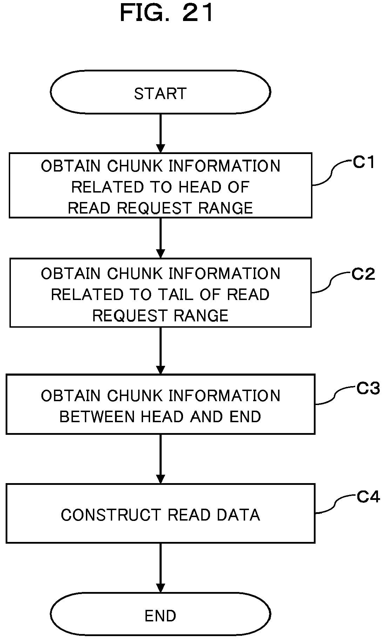

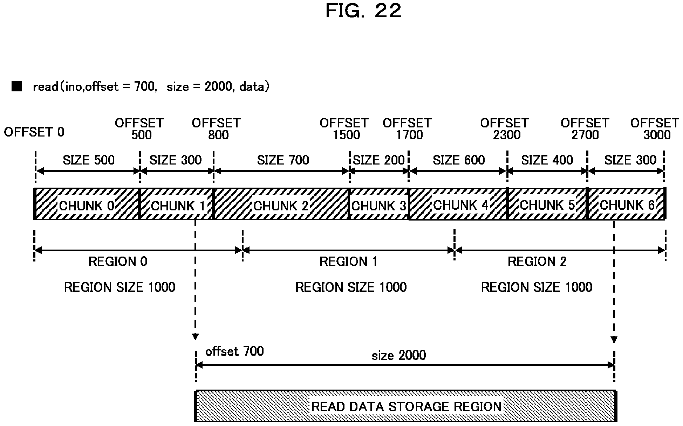

The read process of the cloud storage system 1 according to the example of the embodiment will be described with reference to FIG. 22 according to a flowchart (steps C1 to C4) illustrated in FIG. 21. In this regard, FIG. 22 is a diagram for explaining the read process.

FIG. 22 illustrates an example where data (read data) whose offset is 700 and whose size is 2000 bytes is read in the file subjected to variable length chunking.

In step C1, the file access processor 22 obtains chunk information related to a read request range head.

More specifically, by first calculating a value (offset/region size) obtained by dividing offset added to the read request as an argument by a region size, and deciding an integer portion of the quotient, the file access processor 22 specifies a region to which a chunk corresponding to the read request range head portion belongs.

In the example illustrated in FIG. 22, the file access processor 22 obtains a region number to which the chunk corresponding to the read request range head belongs by calculating the following equation. In the following equation, an integer portion of a quotient is used as a region number.

$$700 \text{ (offset)}/1000 \text{ (region size)} \approx 0 \text{ (= region 0)}.$$

Thus, the chunk corresponding to the read request range head portion belongs to the region 0.

Thus, the file access processor 22 specifies the region of the file (the first region or the first search unit region) to which the chunk (first variable length block data) which is the read range head belongs, based on the position information (offset & size) included in the read request.

Next, the file access processor 22 refers to the chunk map table 243, and obtains a record (chunk) having a previously specified region number. In the example illustrated in FIG. 22, the chunks 0, 1 and 2 belong to the region 0.

Subsequently, the file access processor 22 compares offset and size of each obtained record, and offset and size of data (input data) related to the inputted read request. Further, the file access processor 22 selects a record whose offset and size correspond to offset and size of the input information.

In the example illustrated in FIG. 22, the offset of the read data is 700, and therefore the read data range overlaps the chunk 1 whose offset is 500 to 800. Further, the offset of the chunk 0 is 0 to 500, and therefore does not overlap the read data range. Similar to the chunk 0, records prior to the overlapping record (the chunk 1 in the example illustrated in FIG. 22) are unnecessary.

Data related to the read request has the offset which is 700 as a starting point and has a data size of 2000 bytes. Therefore, all chunks 2 whose offset is 800 as a start point and whose size is 700 overlaps the read data range.

Hence, the file access processor 22 specifies the chunk 1 as a chunk related to the read request range head. Thus, the file access processor 22 searches the chunk related to the read data head by searching the offset of the chunk included in the specified first region.

In step C2, the file access processor 22 obtains chunk information related to the read request range tail.

The file access processor 22 specifies a chunk related to the read request range tail by the same method as step B1.

In the example illustrated in FIG. 22, the file access processor 22 obtains a region number to which the chunk corresponding to the data tail of the read request range region belongs by calculating the following equation.

In this regard, the file access processor 22 finds the region (second region) related to the read request range tail by calculating "(offset + size)/region size". The file access processor 22 calculates the following equation. In the following equation, an integer portion of a quotient is used as a region number.

$$2700 \text{ (offset)}/1000 \text{ (region size)} \approx 2 \text{ (= region 2)}$$

Thus, the chunk corresponding to the read request range tail portion belongs to the region 2.

Thus, the file access processor 22 specifies the region (the second region or the second search unit region) of the file to which the chunk (second variable length block data) which is the read data tail belongs, based on the position information (offset & size) included in the read request.

Further, when making a data access to the file, the file access processor 22 functions as the search unit region specifier which specifies a region to which an access target variable length chunk belongs, based on the position information (offset & size) included in the data access request.

Furthermore, in the example illustrated in FIG. 22, an offset (offset) of the read request range is 700, and a data size (size) is 2000 bytes.

Hence, the chunk 6 whose offset is 2700 to 3000 partially overlaps this read request range tail. The file access processor 22 selects the chunk 6 which overlaps the read request range tail.

Thus, the file access processor 22 searches a chunk related to the read data tail by searching an offset of the chunk included in the specified second region.

Thus, the file access processor 22 functions as a block searcher which searches a data access target variable length chunk from a variable length chunk belonging to the specified region.

In step C3, the file access processor 22 obtains chunk information between a chunk which overlaps the read request range head, and a chunk which overlaps the read request tail.

When the region (head region) corresponding to the read request range and a region (tail region) corresponding to the read request range are not the same and are not adjacent, the file access processor 22 finds all region numbers between the head region and the tail region.

In the example illustrated in FIG. 22, the head region is the region 0 and the tail region is the region 2. Hence, a region (intermediate region) between the head region and the tail region is the region 1.

The file access processor 22 refers to the chunk map table 243, and obtains a record having a region number (region) of the intermediate region.

In the example illustrated in FIG. 22, the file access processor 22 obtains records of chunks 3 and 4 as records having the region numbers (region) of the intermediate regions.

In step C4, the file access processor 22 constructs read data.

More specifically, the file access processor 22 refers to the chunk table 244, obtains a record having the same value as hash of all records obtained in each process in C1 to C3, and reads chunk data. Further, the file access processor 22 copies each of the head and tail chunks except a portion which does not fall in the read request range, to the read data storage region of the cache buffer memory 13.

Hence, the file access processor 22 functions as a read processor which extracts read data from a range of the file from the first variable length chunk to the second variable length chunk.

(C) Effect

Thus, in the cloud storage system 1 according to the example of the embodiment, the file access processor 22 performs variable length chunking, and the deduplication processor 21 performs a deduplication process on each chunk subjected to the variable length chunking.

Thus, even when, for example, data of one byte is added to part of chunks in response to a write request, the other chunks are not influenced, so that it is possible to efficiently perform deduplication.

The file access processor 22 partitions the file subjected to the variable length chunking into a plurality of regions (regions) of fixed lengths.

Further, when making a data access request (a write request or a read request), the file access processor 22 can specify a data access destination chunk in a short time by specifying an access target region first, and searching a chunk belonging to this specified region. Consequently, it is possible to improve data access performance.

It is unnecessary to repeat a computation process such as cumulation of chunk sizes in order from a file head subjected to the variable length chunking to specify the data access destination chunk, and it is possible to efficiently specify the data access destination chunk.

(D) Others

Further, the disclosed technique is not limited to the above embodiment, and can be variously modified and carried out without departing from the scope of the present embodiment. Each configuration and each process in the present embodiment can be selected by will or choice as needed or may be optionally combined.

In the above embodiment, the cloud backup gateway 10 is configured as an information processing device which includes the CPU 11, the memory 12 and the storage device 14, and the CPU 11 executes the data processing program to realize this function. However, the embodiment is not limited to this. For example, the processor including the backup server 53 and the business server 52 may execute the data processing program to realize this function, and the embodiment can be variously modified and carried out. Further, in addition to the above deduplication, data compression may be performed on files.

Furthermore, one of ordinary skill in the art can carry out and manufacture the present embodiment according to the above disclosure.

**Claims**

1. A data processing device comprising:

    a block data manager (22) that partitions a data sequence including a plurality of items of variable length block data into a plurality of search unit regions of a predetermined length, and manage each variable length block data per search unit region;
    a search unit region specifier (22) that specifies, when a data access to the data sequence is made, search unit region based on position information included in a data access request, the search unit region being a region to which access target variable length block data belongs; and
    a block searcher (22) that searches data access target variable length block data from the variable length block data belonging to the specified search unit region.

2. The data processing device according to claim 1, **characterized in that**, when the data access is to write write data in the data sequence,
    the search unit region specifier (22) that specifies a first search unit region and a second search unit region in the data sequence based on the position information included in a write request, the first search unit region being a region to which first variable length block data in which a head of the write data is written belongs, and the second search unit region being a region to which second variable length block data in which a tail of the write data is written belongs,
    the block searcher (22) extracts the first variable length block data from the first search unit region, and extracts the second variable length block data from the second search unit region, and
    the data processing device further comprises a write processor that creates update data by attaching the first variable length block to the head of the write data and attaching the second variable length block to the tail of the write data, and partially replace the data sequence with the update data.

3. The data processing device according to claim 2, further comprising a deduplication processor (21) that divides the update data into a plurality of items of variable length block data, and perform a deduplication process on each variable length block data.

4. The data processing device according to any one of claims 1 to 3, **characterized in that**, when the data access is to read read data from the data sequence,
    the search unit region specifier (22) specifies a first search unit region and a second search unit region in the data sequence based on the position information included in a read request, the first search unit region being a region to which first variable length block data that is a head of the read data belongs, and the second search unit region being a region to which second variable length block data that is a tail of the read data belongs,
    the block searcher (22) extracts the first variable length block data from the first search unit region and extracts the second variable length block data from the second search unit region, and
    the data processing device further comprises a read processor (22) that extracts the read data from a range of the data sequence from the first variable length block to the second variable length block.

5. A data processing program causing a computer to execute a process comprising:

    partitioning a data sequence including a plurality of items of variable length block data into a plurality of search unit regions of a predetermined length, and managing each variable length block data per search unit region;
    when making a data access to the data sequence, specifying a search unit region based on position information included in a data access request, the search unit region being a region to which access target variable length block data belongs; and
    searching data access target variable length block data from the variable length block data belonging to the specified search unit region.

6. The data processing program according to claim 5, further causing the computer to execute a process comprising:
    when the data access is to write write data in the data sequence,
    specifying a search unit region in the data sequence based on the position information included in a write request, and extracting first variable length block data from the search unit region, the search unit region being a region to which the first variable length block data in which a head of the write data is written belongs;
    specifying a search unit region in the data sequence based on the position information, and extracting second variable length block data from the search unit region, the search unit region being a region to which the second variable length block data in which a tail of the write data is written belongs; and
creating update data by attaching the first variable length block to the head of the write data and attaching the second variable length block to the tail of the write data, and partially replacing the data sequence with the update data.

7.  The data processing program according to claim 6, further causing the computer to execute a process comprising dividing the update data into a plurality of items of variable length block data, and performing a deduplication process on each variable length block data.

8.  The data processing program according to any one of claims 5 to 7, further causing the computer to execute a process comprising: when the data access is to read read data from the data sequence,
specifying a search unit region in the data sequence based on the position information included in a read request, and extracting first variable length block data from the search unit region, the first variable length block data being a head of the read data and belonging to the search unit region;
specifying a search unit region in the data sequence based on the position information, and extracting second variable length block data from the search unit region, the second variable length block data being a tail of the read data and belonging to the search unit region; and
extracting the read data from a range of the data sequence from the first variable length block to the second variable length block.

9.  A data processing method comprising:

   partitioning a data sequence including a plurality of items of variable length block data into a plurality of search unit regions of a predetermined length, and managing each variable length block data per search unit region;
   when making a data access to the data sequence, specifying a search unit region based on position information included in a data access request, the search unit region being a region to which access target variable length block data belongs; and
   searching data access target variable length block data from the variable length block data belonging to the specified search unit region.

10. The data processing method according to claim 9, further comprising: when the data access is to write write data in the data sequence,
specifying a search unit region in the data sequence based on the position information included in a write request, and extracting first variable length block data from the search unit region, the search unit region being a region to which the first variable length block data in which a head of the write data is written belongs;
specifying a search unit region in the data sequence based on the position information, and extracting the second variable length block data from the search unit region, the search unit region being a region to which first variable length block data in which a tail of the write data is written belongs; and
creating update data by attaching the second variable length block to the head of the write data and attaching the second variable length block to the tail of the write data, and partially replacing the data sequence with the update data.

11. The data processing method according to claim 10, further comprising dividing the update data into a plurality of items of variable length block data, and performing a deduplication process on each variable length block data.

12. The data processing method according to any one of claims 9 to 11, further comprising: when the data access is to read read data from the data sequence,
specifying a search unit region in the data sequence based on the position information included in a read request, and extracting first variable length block data from the search unit region, the first variable length block data being a head of the read data and belonging to the search unit region;
specifying a search unit region in the data sequence based on the position information, and extracting second variable length block data from the search unit region, the second variable length block data being a tail of the read data and belonging to the search unit region; and
extracting the read data from a range of the data sequence from the first variable length block to the second variable length block.

FIG. 1

# FIG. 2

BUFFER MEMORY SIZE

13

13b

MAXIMUM
CHUNK SIZE

13a

CACHE MEMORY SIZE

MAXIMUM
CHUNK SIZE

13b

# FIG. 3

OFFSET 0      OFFSET 100     OFFSET 190       OFFSET 320   OFFSET 400

| 100 BYTES | 90 BYTES | 130 BYTES | 80 BYTES |
|:---:|:---:|:---:|:---:|
| CHUNK 0 | CHUNK 1 | CHUNK 2 | CHUNK 3 |

200 BYTES                200 BYTES

REGION 0                 REGION 1

OFFSET 0               OFFSET 200             OFFSET 400

OFFSET 50/REGION SIZE 200 = 0: REGION 0
(OFFSET 50 + DATA SIZE 80)/REGION SIZE 200 = 0: REGION 0
-> ONLY CHUNK OF REGION 0 IS SEARCH TARGET.

FIG. 4

| ITEM | TYPE | CONTENTS |
|---|---|---|
| parent | NUMERICAL VALUE | inode NUMBER OF PARENT DIRECTORY |
| name | CHARACTER STRING | NAME OF CORRESPONDING ENTRY (DIRECTORY NAME/FILE NAME) |
| ino | NUMERICAL VALUE | inode NUMBER OF CORRESPONDING ENTRY |

241:DIRECTORY TABLE

# FIG. 5

ROUTE DIRECTORY

| parent | name | ino |
|--------|------|-----|
| 0 | . | 1 |

241

SUBDIRECTORY:/A

| parent | name | ino |
|--------|------|-----|
| 1 | A | 2 |

241

FILE:/A

| parent | name | ino |
|--------|------|-----|
| 2 | X | 3 |

241

SUBDIRECTORY:/B

| parent | name | ino |
|--------|------|-----|
| 1 | B | 4 |

241

SUBDIRECTORY:/B/C

| parent | name | ino |
|--------|------|-----|
| 4 | C | 5 |

241

FILE:/B/C/Y

| Parent | name | ino |
|--------|------|-----|
| 5 | Y | 6 |

241

FILE:/B/C/Z

| parent | name | ino |
|--------|------|-----|
| 5 | Z | 7 |

241

# FIG. 6

| ITEM | TYPE | CONTENTS |
|---|---|---|
| ino | NUMERICAL VALUE | inode NUMBER (LINKED TO ino OF DIRECTORY TABLE) |
| mode | NUMERICAL VALUE | AUTHORITY INFORMATION |
| nlink | NUMERICAL VALUE | THE NUMBER OF HARD LINKS |
| uid | NUMERICAL VALUE | USER ID OF OWNER |
| gid | NUMERICAL VALUE | GROUP ID OF OWNER |
| size | NUMERICAL VALUE | SIZE (FILE SIZE) |
| atime | NUMERICAL VALUE | FINAL ACCESS TIME |
| mtime | NUMERICAL VALUE | FINAL UPDATE TIME |
| ctime | NUMERICAL VALUE | FINAL STATE CHANGE TIME |

242:ENTRY TABLE

# FIG. 7

| ITEM | TYPE | CONTENTS |
|---|---|---|
| ino | NUMERICAL VALUE | inode NUMBER (LINKED TO ino OF ENTRY TABLE) |
| region | NUMERICAL VALUE | REGION NUMBER |
| offset | NUMERICAL VALUE | OFFSET OF THIS CHUNK |
| size | NUMERICAL VALUE | SIZE OF THIS CHUNK |
| hash | BYTE SEQUENCE | HASH VALUE |

243:CHUNK MAP TABLE

# FIG. 8

| ITEM | TYPE | CONTENTS |
|------|------|----------|
| size | NUMERICAL VALUE | CHUNK SIZE |
| hash | NUMERICAL VALUE | HASH VALUE (LINKED TO hash OF CHUNK MAP TABLE) |
| refcnt | NUMERICAL VALUE | THE NUMBER OF FILES HAVING THIS CHUNK |
| chunk | BYTE SEQUENCE | ENTITY OF CHUNK DATA※ |

**244**:CHUNK TABLE

# FIG. 9

WRITE DATA

| CHUNK 0 | CHUNK 1 | CHUNK 2 | EXTRA DATA |

# FIG. 10

WRITE DATA

↓ COPY

BUFFER MEMORY

13

# FIG. 11

Write REQUEST IS write (ino, offset, size, data)

| ARGUMENT | DESCRIPTION |
|---|---|
| ino | ALLOCATED ino |
| offset | FILE POSITION (THE NUMBER OF BYTES FROM FILE HEAD) TO WRITE DATA (data) |
| size | WRITE DATA (data) SIZE (BYTE) |
| data | WRITE DATA |

# FIG. 12

START

CREATE AND STORE RECORD
OF DIRECTORY TABLE,
AND NEWLY ALLOCATE inode NUMBER — A1

CREATE AND STORE RECORD
OF ENTRY TABLE — A2

WRITE DATA, AND CREATE AND STORE CHUNK
OF VARIABLE LENGTH CHUNKING — A3

UPDATE AND STORE RECORD
OF ENTRY TABLE — A4

END

FIG. 13

# FIG. 14

# FIG. 15

# FIG. 16

WRITE DATA

COPY

CHUNK 0 | CHUNK 1 | EXTRA DATA | WRITE DATA

VARIABLE LENGTH CHUNKING PROCESSING TARGET

# FIG. 17

```
        ┌─────────────┐
        │    START    │
        └─────────────┘
               │
               ▼
┌──┬────────────────────────────────┬──┐    B1
│  │ OBTAIN CHUNK INFORMATION RELATED│  │
│  │      TO WRITE DATA HEAD         │  │
└──┴────────────────────────────────┴──┘
               │
               ▼
┌──┬────────────────────────────────┬──┐    B2
│  │ OBTAIN CHUNK INFORMATION RELATED│  │
│  │      TO WRITE DATA TAIL         │  │
└──┴────────────────────────────────┴──┘
               │
               ▼
┌──┬────────────────────────────────┬──┐    B3
│  │     ATTACH EXISTING CHUNKS      │  │
└──┴────────────────────────────────┴──┘
               │
               ▼
┌──┬────────────────────────────────┬──┐    B4
│  │ DIVIDE DATA IN BUFFER MEMORY INTO│  │
│  │  CHUNKS, AND CREATE AND STORE    │  │
│  │  RECORDS OF CHUNK MAP TABLE      │  │
│  │      AND CHUNK TABLE            │  │
└──┴────────────────────────────────┴──┘
               │
               ▼
        ┌─────────────┐
        │     END     │
        └─────────────┘
```

## FIG. 18

OFFSET 700

SIZE 2000

WRITE DATA

OFFSET 0    OFFSET 500    OFFSET 800    OFFSET 1500    OFFSET 1700    OFFSET 2300    OFFSET 2700    OFFSET 3000

SIZE 500    SIZE 300    SIZE 700    SIZE 200    SIZE 600    SIZE 400    SIZE 300

CHUNK 0   CHUNK 1   CHUNK 2   CHUNK 3   CHUNK 4   CHUNK 5   CHUNK 6

REGION 0     REGION 1     REGION 2

REGION SIZE 1000    REGION SIZE 1000    REGION SIZE 1000

● OBTAIN CHUNK RELATED TO WRITE DATA HEAD
OFFSET 700/REGION SIZE 1000 = REGION 0

· EXTRACT CHUNKS 0, 1 AND 2 OF REGION 0
· CHUNK 0 DOES NOT OVERLAP WRITE DATA,
  AND THEREFORE IS UNNECESSARY
· CHUNK 1 IS PARTIALLY CHANGED BY WRITE DATA,
  AND THEREFORE IS NECESSARY
· CHUNK 2 IS ENTIRELY CHANGED BY WRITE DATA,
  AND THEREFORE IS UNNECESSARY

● OBTAIN CHUNK RELATED TO WRITE DATA TAIL
OFFSET 2800/REGION SIZE 1000 = REGION 2

· EXTRACT CHUNKS 5 AND 6 OF REGION 2
· CHUNK 5 DOES NOT OVERLAP WRITE DATA,
  AND THEREFORE IS UNNECESSARY
· CHUNK 6 IS PARTIALLY CHANGED BY WRITE DATA,
  AND THEREFORE IS NECESSARY

# FIG. 19

BUFFER MEMORY SIZE

EXISTING CHUNK1

EXISTING CHUNK6

13b

WRITE DATA

13b

WRITE DATA

13

VARIABLE LENGTH CHUNKING
PROCESSING TARGET

13a

MAXIMUM
CHUNK SIZE

CACHE MEMORY SIZE

MAXIMUM
CHUNK SIZE

# FIG. 20

Read REQUEST IS read (ino, offset, size, data).

| ARGUMENT | DESCRIPTION |
|----------|-------------|
| ino | ALLOCATED ino |
| offset | FILE POSITION (THE NUMBER OF BYTES FROM FILE HEAD) TO READ READ DATA (data) |
| size | DATA (data) SIZE (BYTE) TO READ |
| data | REGION TO STORE READ DATA |

# FIG. 21

START

OBTAIN CHUNK INFORMATION
RELATED TO HEAD OF
READ REQUEST RANGE — C1

OBTAIN CHUNK INFORMATION
RELATED TO TAIL OF READ
REQUEST RANGE — C2

OBTAIN CHUNK INFORMATION
BETWEEN HEAD AND END — C3

CONSTRUCT READ DATA — C4

END

FIG. 22

■ read(ino,offset = 700, size = 2000, data)

## FIG. 23

BUSINESS SERVER

BACKUP SERVER

CLOUD BACKUP GATEWAY

CLOUD

OBJECT STORAGE

500

505

504

503

502

501

BACKUP SOFTWARE

# FIG. 24

FIXED SIZE

FIG. 25

INDEFINITE LENGTH

## FIG. 26

(A)

PREVIOUS BACKUP | abc...

⬇ ADD 1 BYTE (x)
TO FILE HEAD

PRESENT BACKUP | xabc...

■IN CASE OF FIXED LENGTH CHUNKING

(B)

PREVIOUS BACKUP | abc...def | ghi...jkl | mno...pqr | stu...

⬇ ADD 1 BYTE (x) TO FILE HEAD   ⬇ 1 BYTE SHIFTS   ⬇ 1 BYTE SHIFTS

PRESENT BACKUP | xabc...de | fghi...jk | lmno...pq | rstu...

■IN CASE OF VARIABLE LENGTH CHUNKING

(C)

PREVIOUS BACKUP | abc...def | ghi...jkl | mno...pqr | stu...

⬇ ADD 1 BYTE (x) TO FILE HEAD   ⬇ NO CHANGE   ⬇ NO CHANGE

PRESENT BACKUP | xabc...def | ghi...jkl | mno...pqr | stu...

Europäisches
Patentamt

European
Patent Office

Office européen
des brevets

## EUROPEAN SEARCH REPORT

Application Number

EP 17 20 4619

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/290537 A1 (SMITH MARK A [US] ET AL) 15 November 2012 (2012-11-15) * page 1 - page 7 * ----- | 1-12 | INV. G06F17/30 |

TECHNICAL FIELDS
SEARCHED (IPC)

G06F

The present search report has been drawn up for all claims

| Place of search | Date of completion of the search | Examiner |
|---|---|---|
| Munich | 29 March 2018 | Korkuzas, Valdas |

EPO FORM 1503 03.82 (P04C01)

## ANNEX TO THE EUROPEAN SEARCH REPORT
## ON EUROPEAN PATENT APPLICATION NO.

EP 17 20 4619

This annex lists the patent family members relating to the patent documents cited in the above-mentioned European search report.
The members are as contained in the European Patent Office EDP file on
The European Patent Office is in no way liable for these particulars which are merely given for the purpose of information.

29-03-2018

| Patent document cited in search report | Publication date | Patent family member(s) | Publication date |
|---|---|---|---|
| US 2012290537 A1 | 15-11-2012 | US 2012290537 A1<br>US 2012290546 A1<br>US 2014149699 A1 | 15-11-2012<br>15-11-2012<br>29-05-2014 |

EPO FORM P0459

For more details about this annex : see Official Journal of the European Patent Office, No. 12/82

**EP 3 333 730 A1**

**REFERENCES CITED IN THE DESCRIPTION**

**Patent documents cited in the description**

- JP 2014155668 A
- JP 2012141738 A
- JP 2011065268 A